# EUROPÄISCHE PATENTSCHRIFT

(11) **EP 0 522 448 B1**
(45) Veröffentlichungstag und Bekanntmachung des Hinweises auf die Patenterteilung: **22.06.1994**
(21) Anmeldenummer: 92111239.7
(22) Anmeldetag: 02.07.1992
(51) Int. Cl.: B23F 19/10, B23F 23/12, B23Q 1/14

(54) **Verfahren und Vorrichtung zum Bearbeiten der Stirnkanten der Zähne eines Werkstückzahnrades**
Method and device for machining the end edges of the teeth of a gearwheel workpiece
Procédé et dispositif pour l'usinage des arêtes de dents d'une roue dentée

(30) Priorität: 06.07.1991 DE 4122461
(43) Veröffentlichungstag der Anmeldung: 13.01.1993
(73) Patentinhaber: PRÄWEMA WERKZEUGMASCHINENFABRIK GmbH, 37269 Eschwege (DE)
(72) Erfinder: Reuter, Wolfgang, Dipl.-Ing., W-5276 Wiehl (DE)
(74) Vertreter: Sparing Röhl Henseler Patentanwälte

(56) Entgegenhaltungen:
- EP-A- 0 330 289
- DE-A- 3 000 295
- DE-A- 3 312 984
- DE-C- 898 841
- SOVIET INVENTIONS ILLUSTRATED Section PQ, Week 8847, 11. Januar 1989 DerwentPublications Ltd., London, GB; Class P54, AN 88-336962/47

## Beschreibung

Die Erfindung betrifft ein Verfahren zum Bearbeiten der Stirnkanten der Zähne eines Werkstückzahnrads, bei dem das Werkstückzahnrad kontinuierlich gedreht wird und durch auf diese Drehung abgestimmte, periodische Relativbewegungen zwischen den Zähnen des Werkstückzahnrads und einem mit von der Werkstückzahnrad-Drehzahl unabhängigen Drehzahl angetriebenen, fingerförmigen Formwerkzeug unter entsprechender Spanzustellung die Stirnkanten-Bearbeitung erfolgt, und eine Vorrichtung zum Bearbeiten der Stirnkanten der Zähne eines Werkstückzahnrades, das von einer mit einem kontinuierlich umlaufenden Drehantrieb versehenen Werkstückspindel aufnehmbar ist, mit einem von einem Werkzeughalter aufgenommenen, fingerförmigen Formwerkzeug, das mit einem vom Drehantrieb drehzahlunabhängigen Antrieb zum Drehen um seine eigene Achse gekoppelt ist, wobei eine Einrichtung zur Erzeugung periodischer, auf die Werkstückzahnrad-Drehung abgestimmter Relativbewegungen zwischen den Zähnen des Werkstückzahnrads und dem Formwerkzeug vorgesehen ist und der Werkzeughalter längs seiner Achse sowie quer dazu verschiebbar ist.

Ein derartiges Verfahren ist aus der DE 30 00 295 A1 bekannt, die eine Fräsmaschine zum Bearbeiten von Zahnkanten eines Werkstückzahnrads in Form eines Anspitzens (Abdachens) oder Abrundens betrifft, wobei ein Fingerformfräser verwendet wird, dessen Drehzahl unabhängig von der Drehzahl des kontinuierlich angetriebenen Werkstückzahnrades ist. Mittels einer Steuerkurve, deren Drehzahl von der Werkstückzähnezahl und der Werkstückdrehzahl abhängt, werden periodische Hin- und Herbewegungen in Achsrichtung des Werkstückzahnrades zwischen diesem und dem Fingerformfräser ausgeführt, wodurch die Zähne stirnseitig abgerundet werden, d.h. daß hierdurch eine Kopierbewegung bewirkt wird. Für ein Entgarten oder Anfasen ist eine derartige Fräsmaschine aufgrund der dann dabei erzielbaren relativ geringen Arbeitsleistung wenig geeignet.

Aufgabe der Erfindung ist es, ein Verfahren und eine Vorrichtung der eingangs genannten Art zu schaffen, mit denen ein Entgraten oder Anfasen der Stirnkanten der Zähne eines Werkstückzahnrades einfach und mit hoher Arbeitsleistung vorgenommen werden kann.

Diese Aufgabe wird verfahrensmäßig dadurch gelöst, daß zum Entgraten oder Anfasen der Stirnkanten ein fingerförmiges Formwerkzeug verwendet wird, dessen Profil wenigstens angenähert dem Zahnprofil der Verzahnung eines gedachten Gegenrades entspricht, wobei das drehangetriebene fingerförmige Formwerkzeug radial zur Achse des gedachten Gegenrades ausgerichtet um diese Achse in einem ungeraden Verhältnis einer gewählten Zähnezahl des gedachten Gegenrades zur Zähnezahl des Werkstückzahnrades zur Erzeugung einer Wälzbewegung zwischen dem Werkstückzahnrad und dem fingerförmigen Formwerkzeug gedreht wird.

Diese Aufgabe wird ferner vorrichtungsmäßig dadurch gelöst, daß zum Entgraten oder Anfasen das Formwerkzeug ein Profil aufweist, das wenigstens angenähert dem Zahnprofil der Verzahnung eines gedachten Gegenrades entspricht, wobei der Werkzeughalter mit einem Drehantrieb versehen ist und das Formwerkzeug in dem Werkzeughalter radial zur Achse des gedachten Gegenrades ausgerichtet derart gelagert ist, daß das Formwerkzeug bei Drehung mit dem Werkzeughalter um dessen Achse um die Achse des gedachten Gegenrades gedreht wird, wobei die Drehantriebe für die Werkstückspindel und den Werkzeughalter durch eine CNC-Steuerung entsprechend einem ungeraden Verhältnis einer gewählten Zähnezahl des Gegenrades zur Zähnezahl des Werkstückzahnrades zur Erzeugung einer Wälzbewegung zwischen dem Werkstückzahnrad und dem fingerförmigen Formwerkzeug synchronisiert sind.

Als Werkzeug ist hierbei ein fingerförmiger Schleifkörper oder ein fingerförmiger Hochgeschwindigkeitsfräser zweckmäßig, wobei das Werkzeug kontinuierlich mit dem Werkstückzahnrad abwälzend (durch eine CNC-Steuerung wird die Wälzdrehung eines Werkzeughalters mit dem Drehantrieb des Werkstückzahnrads gekoppelt) in Eingriff steht und ein Profil wenigstens angenähert entsprechend dem Zahnprofil eines gedachten Gegenrades aufweist. Hierdurch läßt sich die gewünschte Fase bei jedem Tauchvorschub an zwei eine Zahnlücke begrenzenden Zahnkanten erzeugen. Der Tauchvorschub dient zur Erzeugung der erforderlichen Berührtiefe. Auf dieser erfolgt das Bearbeiten nur durch die Wälzbewegung. Dies führt zu einer sehr effektiven Bearbeitung. Das Werkzeug steht dabei rechtwinklig zur Drehachse des Werkstückzahnrads und kann dadurch auch bei Hohlrädern eingesetzt werden, bei denen zwei durch eine schmale Nut getrennte Innenverzahnungen an den Innenkanten angefast werden müssen.

Eine Schnittzustellung über eine Verdrehung der Lage des Werkzeugs zum Werkstückzahnrad erfüllt dann ihren Zweck, wenn mit einem kleineren Standardwerkzeug eine größere Werkstücklücke überbrückt werden muß.

Wenn die geforderte Fase eine vorgegebene konvexe Form, z.B. einen Außenradius oder eine Fläche unter einem bestimmten Winkel, haben muß, wird zweckmäßigerweise das Formwerkzeug in bezug auf das Werkrad längs einer oder längs zwei zueinander senkrechter Achsen während der Bearbeitung zur entsprechenden Formgebung verfahren. Wird zur Wälzdrehung keine derartige zusätzliche Vorschubbewegung überlagert, so entsteht am Werkstückzahnrad eine konkave Fase durch den Werkzeugradius.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

Fig. 1 zeigt schematisch und perspektivisch eine Vorrichtung zum Entgraten oder Fasen von Verzahnungen eines Werkrads.

Fig. 2 zeigt schematisch den Eingriff zwischen Werkzeug und Werkrad.

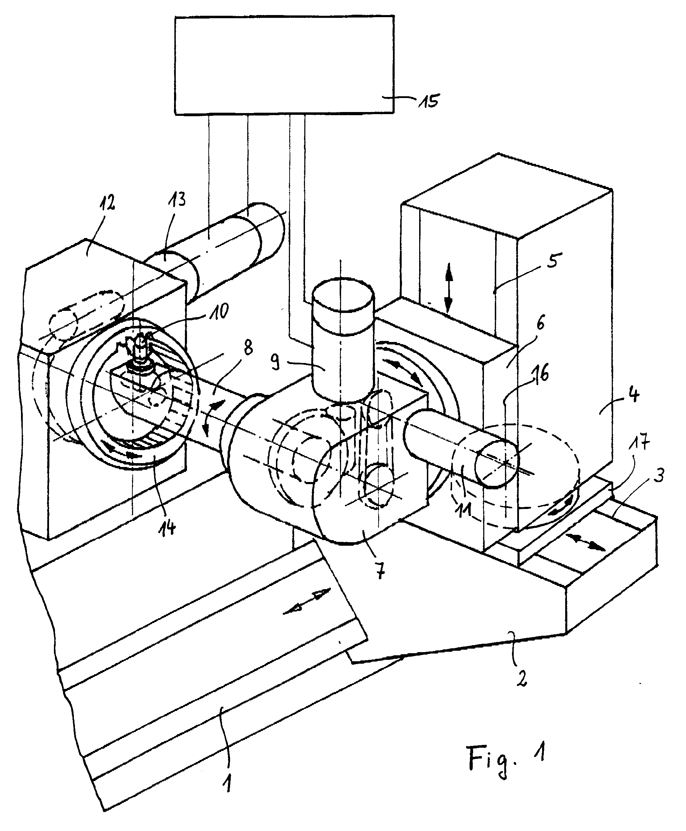

Die in Fig. 1 dargestellte Vorrichtung umfaßt eine Horizontal-Geradführung 1 zum Führen eines Schlittens 2 längs einer X-Achse. Der Schlitten 2 trägt eine Horizontal-Geradführung 3 für einen Ständer 4 zum Führen von diesem längs einer zur X-Achse senkrechten Y-Achse. Der Ständer 4 ist mit einer Vertikal-Geradführung 5 für einen Schlitten 6 zum vertikalen Führen desselben längs einer zur XY-Ebene senkrechten Z-Achse versehen. Der Schlitten 6 nimmt um eine horizontale Querachse drehbar einen Kasten 7 auf, in dem ein Werkzeugkhalter 8 über einen Servomotor 9 antreibbar um eine Achse senkrecht zur horizontalen Querachse drehbar gelagert ist.

Im Werkzeughalter 8 ist in dessen freiem Endbereich ein Formwerkzeug 10, beim dargestellten Ausführungsbeispiel ein Fingerformfräser (statt eines Fräsers kann aber auch ein Schleifwerkzeug verwendet werden), drehbar um seine zur Drehachse des Werkzeughalters 8 senkrechte Achse gelagert und mittels eines Antriebsmotors 11 über eine sich durch den Werkzeughalter 8 erstreckende Getriebekette antreibbar, die eine sich konzentrisch durch den Werkzeughalter 8 erstreckende Welle umfaßt, so daß der Antriebsmotor 11 feststehend am Kasten 7 angeordnet werden kann.

Ferner umfaßt die Vorrichtung einen Spindelkasten 12 mit einer Werkstückspindel, die über einen Servomotor 13 antreibbar ist und an ihrem freien Ende ein zu bearbeitendes, mit einer Verzahnung versehenes Werkrad 14 aufnimmt.

Die Achse der Werkstückspindel und damit des Werkrads 14 verläuft parallel zur Y-Achse und senkrecht zur Querachse, um die der Kasten 7 drehbar ist.

Die Servomotoren 9, 13 sind mit einer CNC-Steuerung 15 gekoppelt, um den Umlauf der Werkstückspindel und des Werkzeughalters miteinander zu synchronisieren.

Das Formwerkzeug 10 besitzt ein Profil, das dem genauen oder angenäherten Zahnprofil eines gewählten Gegenrades entspricht, und läuft mit dem Werkzeughalter 8 um dessen Achse um, die der Achse des gedachten Gegenrades entspricht, wobei die gewählte Übersetzung zwischen Werkrad 14 und gedachtem Gegenrad ein ungerades Verhältnis besitzt, damit eine vollständige Überrollung stattfinden und damit jeder Zahn des Werkrades 14 bearbeitet werden kann. Das Drehzahlverhältnis wird durch die CNC-Steuerung 15 gebildet und aufrechterhalten.

Zum Entgraten oder Fasen kann das Formwerkzeug 10 linear längs der Achsen X und Y verfahren werden, um durch Tauchvorschub mit dem Werkrad 14 abwälzend in Eingriff gebracht zu werden. Wenn die vorgesehen Toleranzen größer sind, reicht ein lineares Verfahren längs der Y-Achse. Die entstehende Fase wird bei Verwendung eines Fräsers entsprechend dem Fräserradius konkav.

Die Zustellung zur rechten oder linken Zahnkante erfolgt über ein Verstellen längs der Querachse, um die der Kasten 7 drehbar ist, d.h. in X- Richtung, oder durch Verdrehen des Kastens 7 um diese Querachse.

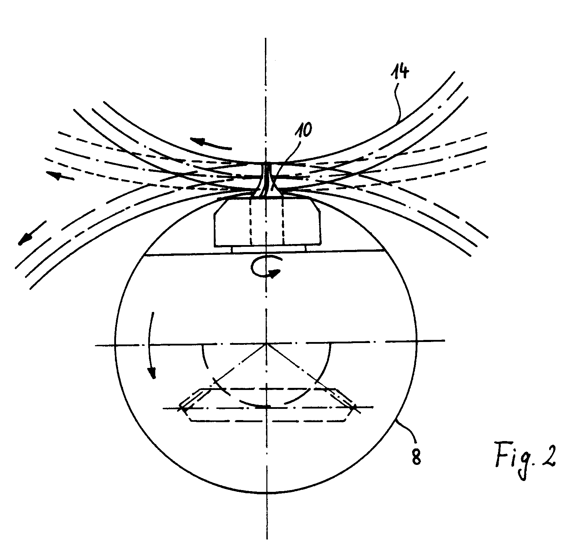

Ersichtlich können außenverzahnte Stirnräder (in Fig. 2 durchgezogen angedeutet), innenverzahnte Stirnräder (länger gestrichelt in Fig. 2 angedeutet) und Kegelräder (kürzer gestrichelt in Fig. 2 angedeutet), deren Achse entsprechend dem Kegelwinkel schräg zur Achse des Werkzeughalters 8 anzuordnen ist, bearbeitet werden. Um die für die Bearbeitung von Kegelrädern notwendige Winkeleinstellung vornehmen zu können, ist der Ständer 4 zusätzlich zu seiner Verschiebbarkeit gegenüber der Geradführung 3 mittels eines Schlittens 17 gegenüber letzterem und damit gegenüber der Geradführung 3 um eine vertikale Achse 16 schwenkbar angeordnet.

In nicht durch die Patentansprüche gedeckter Weise kann das Entgraten und Fasen auch bei stillstehendem Werkzeughalter 8 durchgeführt werden, indem die Werkstückspindel eine Teilbewegung ausführt, während das Formwerkzeug 10 dann entsprechend der Fasenform linear bewegt und an der rechten und linken Zahnflanke des Werkrades 14 vorbeigeführt wird.

## Patentansprüche

1. Verfahren zum Bearbeiten der Stirnkanten der Zähne eines Werkstückzahnrades (14), bei dem das Werkstückzahnrad (14) kontinuierlich gedreht wird und durch auf diese Drehung abgestimmte, periodische Relativbewegungen zwischen den Zähnen des Werkstückzahnrads (14) und einem mit von der Werkstückzahnrad-Drehzahl unabhängigen Drehzahl angetriebenen, fingerförmigen Formwerkzeug (10) unter entsprechender Spanzustellung die Stirnkanten-Bearbeitung erfolgt, dadurch **gekennzeichnet**, daß zum Entgraten oder Anfasen der Stirnkanten ein fingerförmiges Formwerkzeug (10) verwendet wird, dessen Profil wenigstens angenähert dem Zahnprofil der Verzahnung eines gedachten Gegenrades entspricht, wobei das drehangetriebene fingerförmige Formwerkzeug (10) radial zur Achse des gedachten Gegenrades ausgerichtet um diese Achse in einem ungeraden Verhältnis einer gewählten Zähnezahl des gedachten Gegenrades zur Zähnezahl des Werkstückzahnrades (14) zur Erzeugung einer Wälzbewegung zwischen dem Werkstückzahnrad (14) und dem fingerförmigen Formwerkzeug (10) gedreht wird.

2. Verfahren nach Anspruch 1, dadurch gekennzeichnet, daß als Formwerkzeug (10) ein Fräs- oder ein Schleifwerkzeug verwendet wird.

3. Verfahren nach Anspruch 1 oder 2, dadurch gekennzeichnet, daß das Formwerkzeug (10) zur rechten bzw. linken Zahnkante über eine Verstellung längs seiner Querachse zur Werkstückzahnradachse oder durch Verdrehen um eine Querachse zur Werkstückzahnradachse vor der Bearbeitung der entsprechenden Zahnkanten zur Schnittzustellung zugestellt wird.

4. Verfahren nach einem der Ansprüche 1 bis 3, dadurch gekennzeichnet, daß das Formwerkzeug (10) linear in bezug auf das Werkstückzahnrad (14) längs zwei zueinander senkrechter Achsen während der Bearbeitung zur Formgebung der Fase verfahren wird.

5. Verfahren nach einem der Ansprüche 1 bis 3, dadurch gekennzeichnet, daß das Formwerkzeug (10) linear in bezug auf das Werkstückzahnrad (14) längs einer Achse während der Bearbeitung zur Formgebung der Fase verfahren wird.

6. Vorrichtung zum Bearbeiten der Stirnkanten der Zähne eines Werkstückzahnrades (14), das von einer mit einem kontinuierlich umlaufenden Drehantrieb (13) versehenen Werkstückspindel aufnehmbar ist, mit einem von einem Werkzeughalter (8) aufgenommenen, fingerförmigen Formwerkzeug (10), das mit einem vom Drehantrieb (13) drehzahlunabhängigen Antrieb (11) zum Drehen um seine eigene Achse gekoppelt ist, wobei eine Einrichtung zur Erzeugung periodischer, auf die Werkstückzahnrad-Drehung abgestimmter Relativbewegungen zwischen den Zähnen des Werkstückzahnrads (14) und dem Formwerkzeug (10) vorgesehen ist und der Werkzeughalter (8) längs seiner Achse sowie quer dazu verschiebbar ist, dadurch **gekennzeichnet**, daß zum Entgraten oder Anfasen das Formwerkzeug (10) ein Profil aufweist, das wenigstens angenähert dem Zahnprofil der Verzahnung eines gedachten Gegenrades entspricht, wobei der Werkzeughalter (8) mit einem Drehantrieb (9) versehen ist und das Formwerkzeug (10) in dem Werkzeughalter (8) radial zur Achse des gedachten Gegenrades ausgerichtet derart gelagert ist, daß das Formwerkzeug (10) bei Drehung mit dem Werkzeughalter (8) um dessen Achse um die Achse des gedachten Gegenrades gedreht wird, wobei die Drehantriebe (9, 13) für die Werkstückspindel und den Werkzeughalter (8) durch eine CNC-Steuerung (15) entsprechend einem ungeraden Verhältnis einer gewählten Zähnezahl des Gegenrades zur Zähnezahl des Werkstückzahnrades (14) zur Erzeugung einer Wälzbewegung zwischen dem Werkstückzahnrad (14) und dem fingerförmigen Formwerkzeug (10) synchronisiert sind.

7. Vorrichtung nach Anspruch 6, dadurch gekennzeichnet, daß das Formwerkzeug (10) ein Fräs- oder Schleifwerkzeug ist.

8. Vorrichtung nach Anspruch 6 oder 7, dadurch gekennzeichnet, daß der Werkzeughalter (8) um eine zu seiner Achse senkrechte Querachse schwenkbar ist.

9. Vorrichtung nach einem der Ansprüche 6 bis 8, dadurch gekennzeichnet, daß der Werkzeughalter (8) längs drei zueinander senkrechte Achsen (X, Y, Z) verschiebbar ist.

10. Vorrichtung nach einem der Ansprüche 6 bis 9, dadurch gekennzeichnet, daß der Antrieb (11) zum Drehen des Formwerkzeugs (10) um seine eigene Achse konzentrisch durch den Werkzeughalter (8) verläuft.

## Claims

1. Process for the machining of the front edges of the teeth of a workpiece gearwheel (14), in which the workpiece gearwheel (14) is rotated continuously and the front-edge machining takes place, with an appropriate cutting feed, by means of periodic relative movements, coordinated with this rotation, between the teeth of the workpiece gearwheel (14) and a finger-like shaping tool (10) driven at a rotational speed independent of the rotational speed of the workpiece gearwheel, characterized in that a finger-like shaping tool (10), the profile of which corresponds at least approximately to the tooth profile of the toothing of an imaginary mating wheel, is used for deburring or chamfering the front edges, the rotary-driven finger-like shaping tool (10), oriented radially to the axis of the imaginary mating wheel, being rotated about this axis in an odd ratio of a selected number of teeth of the imaginary mating wheel to the number of teeth of the workpiece gearwheel (14), in order to generate a rolling movement between the workpiece gearwheel (14) and the finger-like shaping tool (10).

2. Process according to Claim 1, characterized in that a milling or a grinding tool is used as the shaping tool (10).

3. Process according to Claim 1 or 2, characterized in that, before the machining of the corresponding tooth edges, for the cutting feed the shaping tool (10) is fed to the right or to the left tooth edge as a result of adjustment along its transverse axis relative to the axis of the workpiece gearwheel or as a result of rotation about a transverse axis relative to the axis of the workpiece gearwheel.

4. Process according to one of Claims 1 to 3, characterized in that, during machining, the shaping tool (10) is moved linearly relative to the workpiece gearwheel (14) along two axes perpendicular to one another, for the purpose of shaping the chamfer.

5. Process according to one of Claims 1 to 3, characterized in that, during machining, the shaping tool (10) is moved linearly relative to the workpiece gearwheel (14) along one axis, for the purpose of shaping the chamfer.

6. Apparatus for the machining of the front edges of the teeth of a workpiece gearwheel (14) which can be received by a workpiece spindle provided with a continuously rotating rotary drive (13), having a finger-like shaping tool (10) which is received by a toolholder (8) and which is coupled to a drive (11), independent from the rotary drive (13) in terms of rotational speed, for rotation about its own axis, there being provided a device for generating periodic relative movements, coordinated with the rotation of the workpiece gearwheel, between the teeth of the workpiece gearwheel (14) and the shaping tool (10), and the toolholder (8) being displaceable along its axis and transversely thereto, characterized in that, for deburring or chamfering, the shaping tool (10) has a profile which corresponds at least approximately to the tooth profile of the toothing of an imaginary mating wheel, the toolholder (8) being provided with a rotary drive (9), and the shaping tool (10) being mounted in the toolholder (8) in a manner oriented radially to the axis of the imaginary mating wheel, in such a way that, during the rotation of the toolholder (8) about its axis, the shaping tool (10) is rotated about the axis of the imaginary mating wheel, the rotary drives (9, 13) for the workpiece spindle and for the toolholder (8) being synchronized by means of a CNC-control (15) in conformity with an odd ratio of a selected number of teeth of the mating wheel to the number of teeth of the workpiece gearwheel (14), in order to generate a rolling movement between the workpiece gearwheel (14) and the finger-like shaping tool (10).

7. Apparatus according to Claim 6, characterized in that the shaping tool (10) is a milling or a grinding tool.

8. Apparatus according to Claim 6 or 7, characterized in that the toolholder (8) is pivotable about a transverse axis perpendicular to its axis.

9. Apparatus according to one of Claims 6 to 8, characterized in that the toolholder (8) is displaceable along three axes (X, Y, Z) perpendicular to one another.

10. Apparatus according to one of Claims 6 to 9, characterized in that the drive (11) for rotating the shaping tool (10) about its own axis extends concentrically through the toolholder (8).

## Revendications

1. Procédé pour l'usinage des flancs d'attaque d'une roue dentée à usiner (14), dans lequel ladite roue (14) est entraînée en rotation continue et, par des mouvements relatifs périodiques en correspondance avec cette rotation, entre les dents de ladite roue dentée (14) et un outil de formage en forme de doigt (10) entraîné à une vitesse de rotation indépendante de celle de la roue, l'usinage des flancs d'attaque s'effectue avec l'avance de coupe appropriée, caractérisé en ce qu'on utilise pour l'ébarbage ou le chanfreinage desdits flancs d'attaque un outil de formage en forme de doigt (10) dont le profil correspond, au moins approximativement, au profil des dents de la denture d'une roue conjuguée virtuelle, ledit outil en forme de doigt (10) et entraîné en rotation étant aligné radialement par rapport à l'axe de ladite roue conjuguée virtuelle et tournant autour de cet axe dans une rapport impair entre un nombre de dents choisi de la roue conjuguée virtuelle et le nombre de dents de la roue dentée (14), afin de générer un roulement sans glissement entre la roue dentée (14) et l'outil de formage en forme de doigt (10).

2. Procédé selon le revendication 1, caractérisé en ce qu'on emploie comme outil de formage (10) un outil de fraisage ou un outil de rectification.

3. Procédé selon la revendication 1 ou 2, caractérisé en ce que, avant l'usinage des flancs de dent correspondants, l'outil de formage (10) est déplacé, pour assurer l'avance de coupe, sur le flanc droit ou le flanc gauche de la dent par un mouvement le long d'un axe transversal à celui de la roue dentée ou par une rotation autour d'un axe transversal à celui de la roue dentée.

4. Procédé selon l'une des revendications 1 à 3, caractérisé en ce que l'outil de formage (10) est déplacé linéairement par rapport à la roue dentée à usiner (14), le long de deux axes perpendiculaires l'un à l'autre, pendant l'usinage du chanfrein.

5. Procédé selon l'une des revendications 1 à 3, caractérisé en ce que l'outil de formage (10) est déplacé linéairement par rapport à la roue dentée à usiner (14), le long d'un axe, pendant l'usinage du chanfrein.

6. Dispositif pour l'usinage des flancs d'attaque des dents d'une roue dentée à usiner (14) pouvant être montée sur une poupée munie d'un dispositif d'entraînement rotatif (13) à rotation continue, comportant, monté sur un porte-outil (8), un outil de formage en forme de doigt (10) couplé, afin de tourner autour de son propre axe, à un dispositif d'entraînement (11) à vitesse de rotation indépendante de celle du dispositif d'entraînement rotatif (13), tandis qu'un dispositif est prévu pour la génération, entre les dents de la roue dentée (14) et l'outil de formage (10), de mouvements relatifs périodiques en correspondance avec la rotation de ladite roue dentée à usiner et que le porte-outil (8) est mobile le long de son axe ainsi que transversalement à celui-ci, caractérisé en ce que, pour l'ébarbage ou le chanfreinage, l'outil de formage (10) présente un profil qui correspond, au moins approximativement, au profil des dents de la denture d'une roue conjuguée virtuelle, ledit porte-outil (8) étant muni d'un dispositif d'entraînement rotatif (9) et l'outil de formage (10) étant monté sur le porte-outil (8) en étant orienté radialement à l'axe de la roue conjuguée virtuelle, de telle manière que l'outil de formage (10), lors de la rotation avec le porte-outil (8) autour de son axe, tourne autour de l'axe de la roue conjuguée virtuelle, les entraînements en rotation (9,13) de la poupée et du porte-outil (8) étant synchronisés par une commande numérique par ordinateur (15), en fonction d'un rapport impair entre le nombre de dents choisi pour la roue conjuguée et le nombre de dents de la roue dentée à usiner (14), afin de générer un mouvement de roulement sans glissement entre ladite roue dentée à usiner (14) et ledit outil de formage en forme de doigt (10).

7. Dispositif selon la revendication 6, caractérisé en ce que l'outil de formage (10) est un outil à fraiser ou à rectifier.

8. Dispositif selon la revendication 6 ou 7, caractérisé en ce que le porte-outil (8) est orientable autour d'un axe transversal perpendiculaire à son propre axe.

9. Dispositif selon l'une des revendications 6 à 8 caractérisé en ce que le porte-outil (8) est mobile le long de trois axes perpendiculaires entre eux (X,Y,Z).

10. Dispositif selon l'une des revendications 6 à 9, caractérisé en ce que l'entraînement en rotation (11) de l'outil de formage (10) est réalisé au travers du porte-outil (8) coaxialement à ce dernier.
